# EUROPEAN PATENT SPECIFICATION

(11) **EP 4 456 265 B1**
(45) Date of publication and mention of the grant of the patent: **21.10.2026**
(21) Application number: 22952511.8
(22) Date of filing: 29.07.2022
(51) Int. Cl.: H01M 50/10

(54) **BATTERY AND ELECTRIC DEVICE**
BATTERIE UND ELEKTRISCHE VORRICHTUNG
BATTERIE ET DISPOSITIF ÉLECTRIQUE

(43) Date of publication of application: 30.10.2024
(73) Proprietor: Contemporary Amperex Technology (Hong Kong) Limited, Central, Central And Western District (HK)
(72) Inventor: YAO, Pengcheng, Ningde, Fujian 352100 (CN); ZHANG, Wenhui, Ningde, Fujian 352100 (CN); WANG, Peng, Ningde, Fujian 352100 (CN); CHEN, Xingdi, Ningde, Fujian 352100 (CN)
(74) Representative: Holt, Lucy Rose
(86) International application number: PCT/CN2022/109103
(87) International publication number: WO 2024/021064

(56) References cited:
- EP-A1- 3 767 732
- EP-A1- 4 016 662
- WO-A1-2021/248986
- CN-A- 104 685 660
- CN-A- 108 695 461
- CN-A- 112 640 194
- JP-A- 2017 188 430
- US-A1- 2019 326 565
- ANONYMOUS NU ET AL: "Audi details battery for 2019 e-tron electric SUV", 30 April 2018 (2018-04-30), XP093262478, Retrieved from the Internet <URL:https://www.greencarreports.com/news/1116347_audi-details-battery-for-2019-e-tron-electric-suv>

## Description

### TECHNICAL FIELD

The present application relates to the technical field of batteries, and particularly to a battery and an electric-powered device.

### BACKGROUND

Batteries are generally used with electric-powered devices, for supplying electrical energy to the electric-powered devices. However, during use of the electric-powered devices, a problem that water or dust enters an interior of the battery may easily occur, which affects safety of the battery and the electric-powered device. The document EP 4 016 662 A1 discloses a battery in accordance with the preamble of claim 1.

### SUMMARY

The present disclosure provides a battery and an electric-powered device, which can improve safety of the battery.

Aspects of the invention are set out in the claims. On one aspect, the embodiments of the present disclosure provide a battery including a casing, a carrying component, a battery cell and a first sealing member. The casing includes a first opening, the carrying component is adapted to cover and close the first opening to enclose and form a first accommodating chamber with the casing. The battery cell is accommodated in the first accommodating chamber and connected to the carrying component, and the first sealing member is at least partially disposed between the casing and the carrying component to seal the first opening.

In the embodiments of the present application, by additionally providing the first sealing member in the battery and disposing the first sealing member between the casing and the carrying component, a risk of water vapor or dust in an environment entering an inner side of the first opening is reduced, thereby reducing a probability of the battery cell coming into contact with liquid or dust, and improving safety of the battery in use, and thus the embodiments of the present application are applicable for adverse working conditions such as wading through water.

In some embodiments, a thickness of the carrying component is H, where 0.4 mm ≤ H ≤ 30 mm.

In the embodiments of the present application, it can allow sufficient space inside the battery for disposing the battery cell, while ensuring reliable connection between the battery and the vehicle.

In some embodiments, 0.5 mm ≤ H ≤ 10 mm.

In some embodiments, a thickness of the carrying component is H, a weight of the battery is M, and H and M meet the requirements of 0.0004 mm/kg < H/M ≤ 3 mm/kg.

In the embodiments of the present application, it can ensure that the battery has a certain energy density to achieve long-term use of the vehicle, while ensuring an overall strength of the battery.

In some embodiments, 0.006 mm/kg < H/M ≤ 1 mm/kg.

The carrying component includes a carrying plate and a connecting plate disposed on a side of the carrying plate facing away from the casing, and the first sealing member is disposed between the carrying plate and the casing. The connecting plate is formed as an annular structure, and the connecting plate and the carrying plate enclose and form a second accommodating chamber, and an end of the second accommodating chamber facing away from the carrying plate is formed with a second opening.

In the embodiments of the present application, by providing the connecting plate, additional space can be provided in the battery for disposing electronic devices, thereby further improving utility rate of space inside the battery and ensuring a compact overall structure of the battery.

In some embodiments, the first sealing member is fixedly connected to the carrying plate.

In the embodiments of the present application, by fixing the first sealing member on the carrying plate, a risk of misalignment of the first sealing member caused by shaking and other factors is reduced, thereby ensuring that the first sealing member can continuously maintain a good sealing effect during operation of the vehicle, further reducing the risk of water vapor or dust in the environment entering an interior of the casing, and improving the safety of the battery.

The battery further includes a cover plate and a second sealing member, the cover plate is adapted to cover and close the second opening, and at least a portion of the second sealing member is disposed between the cover plate and the connecting plate to seal the second opening.

In the embodiments of the present application, the second sealing member is located between the cover plate and the connecting plate, that is, located near a connecting portion between a chassis of the vehicle and the battery. By providing the second sealing member, firstly, the risk of water vapor or dust entering the second accommodating chamber can be reduced, and usage reliability of electronic devices in the second accommodating chamber is improved; secondly, the risk of water vapor or dust entering an interior of the vehicle from a vicinity of the connecting portion between the chassis of the vehicle and the battery can be reduced, and the safety of the vehicle in use can be improved.

In some embodiments, the battery further includes a control box, and the control box is accommodated in the second accommodating chamber and electrically connected to the battery cell.

In the embodiments of the present application, the control box is disposed in the second accommodating chamber inside the battery, so that a distance between the control box and the battery cell is relatively short, which is conducive to achieving electrical connection between the battery cell and the control box.

The connecting plate includes a side wall and a top wall, the top wall is disposed opposite the carrying plate and encloses and forms the second opening, and the side wall is disposed around the top wall and connected to the carrying plate.

In the embodiments of the present application, the top wall is located on a side of the side wall facing away from the carrying plate, the top wall is formed as an annular structure, and the opening formed by the top wall is the second opening. Meanwhile, there is a certain angle between the top wall and the side wall, and the presence of the top wall provides installation space for the cover plate, so that the cover plate can be fixed and connected to the top wall. The connection manner includes but is not limited to welding, bonding, bolted connection, and the like.

In some embodiments, the second sealing member is fixedly connected to the top wall.

In the embodiments of the present application, by fixing the second sealing on the top wall, a risk of misalignment of the second sealing member caused by shaking and other factors during operation of the vehicle is reduced, thereby ensuring that the second sealing member can continuously maintain a good sealing effect during operation of the vehicle, further reducing the risk of water vapor or dust in the environment entering the second accommodating chamber and the interior of the vehicle, and improving the safety in use.

A surface of the side wall facing away from the second accommodating chamber is recessed towards a direction close to the second accommodating chamber to form a guiding groove, and the guiding groove extends in a thickness direction of the carrying plate.

In the embodiments of the present application, the guiding groove can guide a flow of liquids, and under the action of gravity, the liquids will flow downwards along the guiding groove and flow to the carrying plate. Due to the presence of the first sealing member, the liquids will not enter the casing and eventually leave the carrying plate along with the shaking of the vehicle and inertial effect thereof.

In some embodiments, multiple guiding grooves are provided, and the multiple guiding grooves are spaced apart from each other around the second accommodating chamber on an outer side thereof.

In the embodiments of the present application, multiple guiding grooves are provided on the side wall, and all the guiding grooves can guide the flow of liquids, thereby helping the liquids to leave the chassis of the vehicle and the side wall as soon as possible.

In some embodiments, at least one of the first and second sealing members is formed as an annular structure.

In the embodiments of the present application, both the first sealing member and the second sealing member are adapted to improve the sealing effect, and by forming at least one of the first sealing member and the second sealing member as the annular structure, the size of the first sealing member or the second sealing member, and thus material costs can be reduced, while ensuring the sealing effect.

In a second aspect, the embodiments of the present application provide an electric-powered device, including the battery in any of the above embodiments, which is adapted to provide electrical energy.

### BRIEF DESCRIPTION OF THE DRAWINGS

In order to describe the technical solution of the embodiments of the present application more clearly, a brief introduction will be given to the accompanying drawings required in the embodiments of the present application; the accompanying drawings described below are only some embodiments of the present application, and for ordinary skilled person in the art, other accompanying drawings can be obtained based on the accompanying drawings without any creative effort.
Fig. 1 is a structural schematic diagram of a vehicle provided in some embodiments of the present application;
Fig. 2 is an explosive schematic diagram of a battery provided in some embodiments of the present application;
Fig. 3 is a structural schematic diagram of some components in the battery shown in Fig. 2;
Fig. 4 is an enlarged structural schematic diagram of region Q in Fig. 2;
Fig. 5 is a structural schematic diagram of a carrying component in a battery provided in some embodiments of the present application;
Fig. 6 is a structural schematic diagram of some components in a battery provided in some embodiments of the present application.

In the accompanying drawings, figures are not drawn to an actual scale.

In the accompanying drawings
1000, vehicle.
100, battery; 200, controller; 300, motor.
11, casing; 111, first opening; 112, first accommodating chamber; 113, base plate; 114, side beam structure; 12, carrying component; 121, carrying plate; 122, connecting plate; 1221, top wall; 1222, side wall; 1223, guiding groove; 123, second accommodating chamber; 124, second opening; 13, battery cell; 14, first sealing member; 15, cover plate; 16, second sealing member; 17, control box.
X, thickness direction.

### DETAILED DESCRIPTION

In order to make the purpose, technical solutions and advantages of the embodiments of the present application clearer, the technical solutions in the embodiments of the present application will be clearly described below in combination with the accompanying drawings in the embodiments of the present application.

Unless otherwise defined, all technical and scientific terms used in the present application have the same meanings as those commonly understood by the person skilled in the art of the present application; the terms used in the specification of the present application are only intended to describe specific embodiments while not limit the present application; the terms "include" and "have" in the description, claims and the above description of accompanying drawings of the present application, and any variations thereof, are intended to cover non-exclusive inclusion. The terms "first", "second", etc. in the description, claims and the above description of accompanying drawings of the present application are used to distinguish different objects, rather than to describe specific sequences or primary and secondary relationships.

When referring to "embodiment" in the present application, it means that specific features, structures, or characteristics described in combination with said embodiment can be included in at least one embodiment of the present application. The phrase appearing in various positions in the description does not necessarily refer to the same embodiment, nor an independent or alternative embodiment that is mutually exclusive with other embodiments.

In the description of the present application, it should be noted that unless otherwise specified and limited, the terms "installation", "connection", "coupling", and "attachment" should be broadly understood, for example, they can be fixed connections, detachable connections, or integrated connections; they can be direct connections, or indirect connections through intermediate mediums, or can be internal connections between two components. For ordinary skilled person in the art, the specific meanings of the above terms in the present application can be understood according to specific circumstances.

In the present application, the term "and/or" is only a description of association relationship of associated objects, indicating that there can be three types of relationships, for example, C and/or D can indicate the presence of C alone, the presence of C and D simultaneously, and the presence of D alone. In addition, the character "/" in the present application generally indicates that the associated objects before and after the character are in an "or" relationship.

In the embodiments of the present application, the same reference numerals represent the same components, and for simplicity, detailed descriptions of the same components may be omitted in different embodiments. It should be understood that the thickness, length, width, and other dimensions of various components as well as the overall thickness, length, width, and other dimensions of an integrated device in the embodiments of the present application shown in the accompanying drawings, are only illustrative examples and should not constitute any limitations in the present application.

The term "multiple" in the present application refers to two or more (including two).

In the present application, a battery cell may include a lithium ion secondary battery cell, a lithium ion primary battery cell, a lithium sulfur battery cell, a sodium-lithium ion battery cell, a sodium ion battery cell, a magnesium ion battery cell, or the like, and the embodiments of the present application are not limited to this. The battery cell can be in a shape of a cylinder, a flat body, a rectangular cuboid or in other shapes, and the embodiments of the present application are not limited to this, either. The battery cells are generally divided into three kinds according to packaging manners: cylindrical battery cells, square battery cells, and soft pack battery cells. The embodiments of the present application are not limited to these either.

The battery mentioned in the embodiments of the present application refers to a single physical module that includes one or more battery cells to provide higher voltage and capacity. For example, the battery mentioned in the present application may include battery modules, battery packs, or the like. The battery generally includes a casing for packaging one or more battery cells. The casing can prevent liquids or other foreign substances from affecting charging or discharging of the battery cells.

The battery cell includes an electrode assembly and electrolyte, and the electrode assembly includes a positive electrode plate, a negative electrode plate, and a separator. The battery cell operates mainly relying on movement of metal ions between the positive and negative electrode plates. The positive electrode plate includes a positive current collector and a positive active substance layer, the positive active substance layer is coated on a surface of the positive current collector, and the positive current collector not coated with the positive active substance layer protrudes out from the positive current collector coated with the positive active substance layer and serves as a positive tab. Taking the lithium ion battery cell as an example, the positive current collector can be made of aluminum, and the positive active substance may be lithium cobalt oxide, lithium iron phosphate, ternary lithium or lithium manganese oxide. The negative electrode plate includes a negative current collector and a negative active substance layer, the negative active substance layer is coated on a surface of the negative current collector, the negative current collector not coated with the negative active substance layer protrudes out from the negative current collector coated with the negative active substance layer and serves as a negative tab. The negative current collector can be made of copper, and the negative active substance can be carbon or silicon. To ensure that no melting occurs when high current flows, multiple positive tabs are provided and stacked together, and multiple negative tabs are provided and stacked together. The separator can be made of PP (polypropylene) or PE (polyethylene), or the like. Further, the electrode assembly may be formed in a winding structure or a stacking structure.

For the electric-powered device such as a vehicle, the applicant has noticed that during use of the battery, problems that water or dust enters the battery may easily occur.

By research, the applicant found that, the reason that the water enters the battery lies in that, the battery, as a part of the electric-powered device, such as a vehicle, is fixed to the vehicle through bolts or the like currently. However, the bolted connection cannot achieve sealing between the battery and the vehicle, resulting in that water or dust seeps into an interior of the battery through a connecting portion between the vehicle and the battery when the vehicle is in an adverse condition such as wading through water, thereby causing the water or dust entering the battery, and thus affecting normal use and safety of the battery and the vehicle.

Based on the above issues found by the applicant, the present application provides a battery, which includes a casing, a carrying component, a battery cell, and a first sealing member. The casing includes a first opening, and the carrying component is adapted to cover and close the first opening to form a first accommodating chamber with the casing. The battery cell is accommodated in the first accommodating chamber and connected to the carrying component, and the first sealing member is at least partially disposed between the casing and the carrying component to seal the first opening.

By additionally providing the first sealing member and disposing the first sealing member between the casing and the carrying component, the present application reduces a risk of water vapor or dust in an environment entering an inner side of the first opening, reduces a probability of the battery cell coming into contact with liquids or dust, improves safety of battery in use, and is applicable for the adverse working condition such as wading through water.

The technical solution described in the embodiments of the present application is applicable to the electric-powered device using the battery, and the electric-powered device can be for example, a battery car, an electric vehicle, a ship, a spacecraft, an electric toy, an electric tool, and so on; the spacecraft for example includes an airplane, a rocket, a space shuttle, a space ship, and the like, the electric toy for example includes a stationary or mobile electric toy, such as an electric car toy, an electric ship toy, an electric plane toy, and the like, and the electric tool for example includes a metal cutting electric tool, a grinding electric tool, an assembling electric tool and a railway electric tool, such as an electric drill, an electric grinder, an electric wrench, an electric screwdriver, an electric hammer, an electric impact drill, a concrete vibrator and an electric planer.

The battery cell described in the embodiments of the present application is not limited to be applicable for the electric-powered devices as described above, and for the sake of simplicity, the following embodiments are all described by taking an electric vehicle as an example.

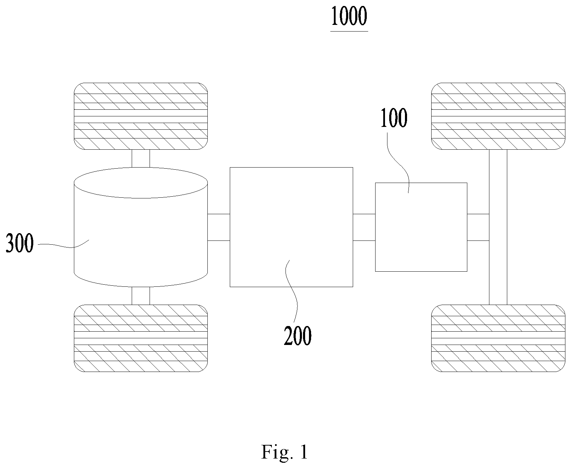

Please refer to Fig. 1, a vehicle 1000 can be a fuel powered vehicle, a gas powered vehicle, or a new energy vehicle, and the new energy vehicle can be a pure electric vehicle, a hybrid electric vehicle, an extended range vehicle, or the like. The vehicle 1000 can be provided with a battery 100 in its interior, and specifically for example, the battery 100 can be disposed at a bottom, front or rear of the vehicle 1000. The battery 100 can be adapted for supplying electrical power to the vehicle 1000, and for example, the battery 100 can serve as an operating power supply of the vehicle 1000. The vehicle 1000 can further include a controller 200 and a motor 300, and the controller 200 is adapted to control the battery to supply electrical power to the motor 300, for example. The battery can be used for starting, navigation, and the like of the vehicle 1000, and certainly, the battery 100 can further be adapted to drive the vehicle 1000 to travel, replacing or partially replacing fuel or natural gas to provide a driving force for the vehicle 1000.

Below, the structure of the battery 100 is described in detail combining with the accompanying drawings.

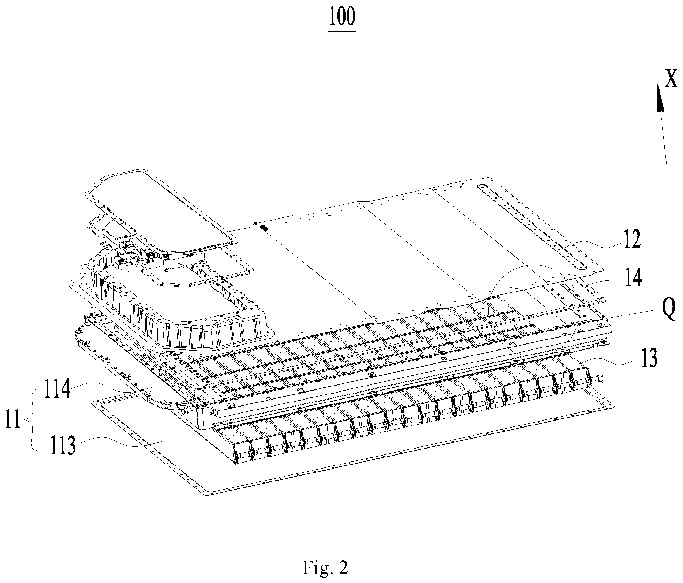

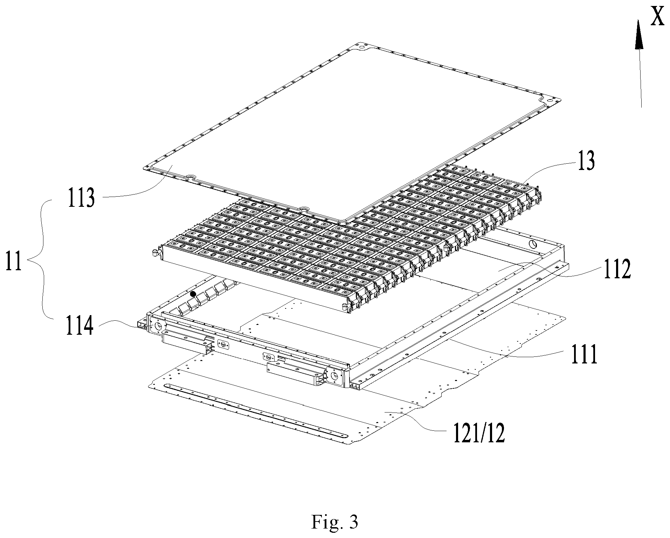

The embodiments of the present application provide a battery 100, and referring to Figs. 2 to 4, the battery 100 includes a casing 11, a carrying component 12, a battery cell 13, and a first sealing member 14. The casing 11 includes a first opening 111, and the carrying component 12 is adapted to cover and close the first opening 111 to enclose and form a first accommodating chamber 112 with the casing 11. The battery cell 13 is accommodated in the first accommodating chamber 112 and connected to the carrying component 12, and the first sealing member 14 is at least partially disposed between the casing 11 and the carrying component 12 to seal the first opening 111.

The casing 11 includes the first opening 111 which is communicated with the outside, and the carrying component 12 covers and closes the first opening 111 on the casing 11, and encloses and forms the first accommodating chamber 112 for accommodating the battery cell 13 together with the casing 11. The casing 11 and the carrying component 12 can be formed as various structures. In some embodiments, the casing 11 can be formed as a hollow structure with an opening at one end, the carrying component 12 is formed as a plate-like structure, and the carrying component 12 covers and closes the first opening 111 of the casing 11 to form the first accommodating chamber 112; each of the casing 11 and the carrying component 12 can be formed as a hollow structure with an opening on one side, and the opening side of the carrying component 12 covers and closes the first opening 111 of the casing 11 to form the first accommodating chamber 112. Certainly, the casing 11 and the carrying component 12 can be formed in various shapes, such as cylinders, rectangular cuboids, or the like. Exemplarily, as shown in Fig. 2, the casing 11 includes a base plate 113 and a side beam structure 114, and the base plate 113 is fixedly connected to the side beam structure 114 through bolted connection or other manners.

Exemplarily, the carrying component 12 is not only adapted to cover and close the first opening 111, but also to achieve a fixed connection with the vehicle 1000. Specifically, the carrying component 12 includes at least two surfaces opposite in a thickness direction X, one of the surfaces is adapted to fix with the casing 11, and cover and close the first opening 111, and the other surface is adapted to be fixed with a chassis of the vehicle 1000. In some examples, the vehicle 1000 and the carrying component 12 can be fixed by welding, bonding, bolted connection, or the like. Similarly, the casing 11 and the carrying component 12 can be fixed by welding, bonding, bolted connection, or the like.

In the battery 100, there may be one battery cell 13, or multiple battery cells 13. If there are multiple battery cells 13, the multiple battery cells 13 can be connected in series, in parallel, or in hybrid, where "in hybrid" means that the multiple battery cells 13 are connected both in series and in parallel. The multiple battery cells 13 can be directly connected in series, in parallel, or in hybrid, and an integrity composed of the multiple battery cells 13 can be received in the first accommodating chamber 112; certainly, it is also available that the multiple battery cells13 are connected in series, in parallel, or in hybrid to form battery modules at first, and then multiple battery modules are connected in series, in parallel, or in hybrid to form an integrity, which is accommodated in the first accommodating chamber 112. The embodiments of the present application do not limit the specific structure of the battery cell 13.

The battery cell 13 is connected to the carrying component 12, and the connection manner includes but is not limited to bonding, and the like. When being installed on the chassis of the vehicle 1000, the battery 110 needs to be inverted. That is, the carrying component 12 is initially located below the battery cell 13, and when installed on the chassis of the vehicle 1000, the battery 100 is rotated by 180 ° so that the carrying component 12 is located above the battery cell 13, and the battery 100 is fixed to the vehicle 1000 through the carrying component 12. In order to reduce the risk of misalignment of the battery cell 13 inside the casing 11 due to shaking during movement of the vehicle 1000, the battery cell 13 is connected to the carrying component 12.

The first sealing member 14 is at least partially disposed between the casing 11 and the carrying component 12 for sealing the first opening 111. The first sealing member 14 can be fixedly connected with at least one of the casing 11 and the carrying component 12 through bonding, bolted connection or the like. The first sealing member 14 includes but is not limited to a lip type sealing member or a compressing type sealing member, wherein the compressing type sealing member relies on elastic deformation of the sealing member to cause a contact pressure on sealing contact surfaces, which is greater than an internal pressure of sealed mediums, to achieve the sealing effect; and the lip type sealing member achieves the sealing effect by deforming a lip portion under action of force so that the lip portion tightly adheres to sealing surfaces.

For the size and shape of the first sealing member 14, there are no limitations in the embodiments of the present application. Optionally, the size and shape of a corresponding outer contour of the first sealing member 14 are the same as the size and shape of a corresponding outer contour of the carrying component, which can avoid space and material waste caused by protrusion of the first sealing member 14 while ensuring that the first sealing member 14 can seal the first opening 111.

By additionally providing the first sealing member 14 in the battery 100 and disposing the first sealing member 14 between the casing 11 and the carrying component 12, the embodiments of the present application reduce the risk of water vapor or dust in the environment entering the inner side of the first opening 111, reduce the probability of the battery cell 13 coming into contact with the liquid or dust, improve the safety in use and service life of the battery 100, and are applicable for the adverse working conditions such as wading through water.

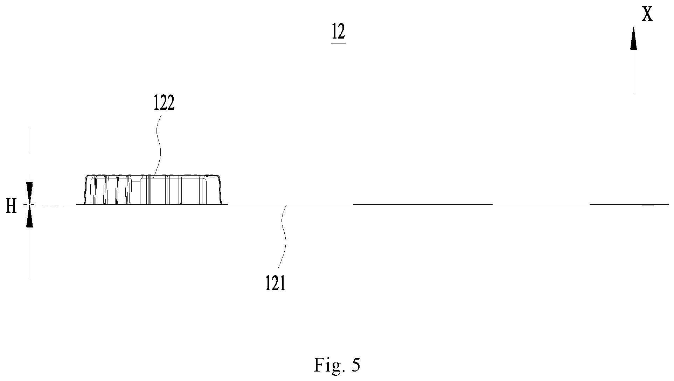

In some embodiments, please refer to Fig. 5, the carrying component 12 has a wide H, where 0.4 mm ≤ H ≤ 30 mm. For example, H is one of 0.4 mm, 1 mm, 5 mm, 10 mm, and 30 mm.

The thickness H of the carrying component 12 refers to the thickness dimension of the carrying component 12 at any position. It should be noted that the thickness H of the carrying component 12 should not be easily understood as the dimension of the carrying component 12 in the thickness direction X, and the thickness H of the carrying component 12 needs to be determined according to specific structures of the carrying component 12 at different positions.

The carrying component 12 is adapted to achieve fixing between the battery 100 and the vehicle 1000, and the dimension of the carrying component 12 is generally related to installation reliability of the battery 100 and available space of the battery cell. Specifically, if the thickness of the carrying component 12 is too small, the structural strength of the carrying component 12 itself is weak, and it is difficult to ensure reliable connection between the battery 100 and the vehicle 1000 under long-term use. Moreover, if the thickness of the carrying part 12 is too small, the tight connection between the carrying component 12 and the first sealing member will also be affected, which will easily adversely affect the sealing effect of the first sealing member 14.

If the thickness of the carrying component 12 is too large, it will cause an increase in an overall weight of the battery 100. Moreover, with a constant total volume of the battery 100, it will lead to a reduction of the available space of the battery cell in the battery 100, which is not conducive to the long-term use of the battery 100 in the vehicle 1000.

Therefore, by limiting the thickness H of the carrying component 12 to a range of 0.4 mm-30 mm, the embodiments of the present application allow sufficient space inside the battery 100 for disposing the battery cell, while ensuring the reliable connection between the battery 100 and the vehicle 1000. Further, in some optional embodiments, 0.5 mm ≤ H ≤ 10 mm. For example, H is one of 0.5 mm, 1 mm, 5 mm, 7 mm, and 10 mm.

In some embodiments, the thickness of the carrying component 12 is H, the weight of the battery 100 is M, and H and M meet the requirements of 0.0004 mm/kg < H/M ≤ 3 mm/kg. For example, H/M is one of 0.0004 mm/kg, 0.001 mm/kg, 0.01 mm/kg, 1 mm/kg, and 3 mm/kg.

From the above contents, it can be seen that the thickness of the carrying component 12 is related to the installation reliability of the battery 100 and the available space of the battery cell 13. On this basis, it is also necessary to limit the weight of the battery cell 13 inside the battery 100.

Specifically, when H/M is too small, it indicates that the thickness of the carrying component 12 is insufficient relative to the battery cell 13, and the structural strength of the carrying component 12 is weak, making it difficult to ensure the fixing between the battery 100 and the vehicle 1000, as well as the sealing effect of the first sealing effect 14; meanwhile, the overall reliability of the battery 100 is insufficient, and thus safety accidents such as fire and explosion may easily occur. When the H/M is too large, it indicates that the number or volume of the battery cells 13 inside the battery 100 is too small, resulting in a low overall energy density of the battery 100, and too much space of the battery 100 occupied by the carrying component 12, causing space to be wasted.

In summary, the embodiments of the present application simultaneously controls the thickness of the carrying component 12 and the weight of the battery 100, so as to satisfy the requirements of 0.0004 mm/kg < H/M ≤ 3 mm/kg. The overall strength of the battery 100 is ensured, and meanwhile a certain energy density of the battery 100 is also ensured so as to achieve long-term use of the vehicle 1000. Further, in some optional embodiments, 0.006 mm/kg < H/M ≤ 1 mm/kg. For example, H/M is one of 0.006 mm/kg, 0.01 mm/kg, 0.05 mm/kg, 0.1 mm/kg, and 1 mm/kg.

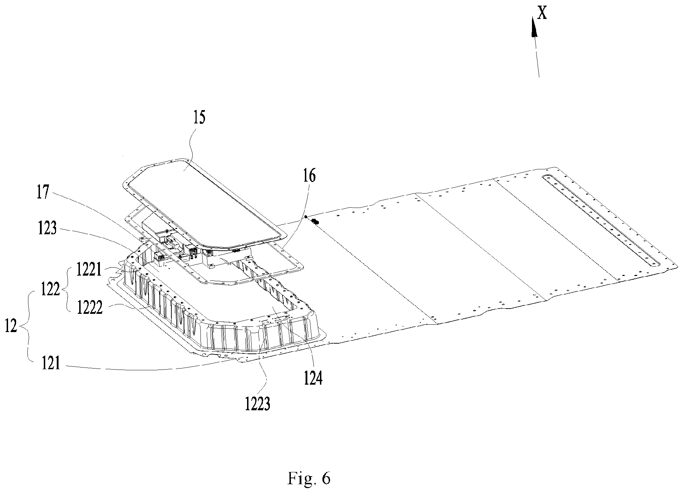

Referring to Figs. 2 and 6, the carrying component 12 includes a carrying plate 121 and a connecting plate 122 disposed on a side of the carrying plate 121 facing away from the casing 11, and the first sealing member 14 is disposed between the carrying plate 121 and the casing 11. The connecting plate 122 is formed as an annular structure and encloses and forms a second accommodating chamber 123 with the carrying plate 121, and an end of the second accommodating chamber 123 facing away from the carrying plate 121 is formed with a second opening 124.

The carrying plate 121 is a part of the carrying component 12 adapted for achieving connection and fixing of the carrying component 12 with the casing 11, and the casing 11 and the carrying plate 121 can be fixed by welding, bonding, bolted connection or the like. The first sealing member 14 is located between the carrying plate 121 and the casing 11. Optionally, an outer contour of an orthographic projection of the first sealing member 14 on the carrying plate 121 completely covers an orthographic projection of the first opening 111 on the carrying plate 121, and coincides with an outer contour of the carrying plate 121. Such design can avoid space and material waste caused by the protrusion of the first sealing member 14, while ensuring the sealing effect of the first sealing member 14 on the first opening 111.

The connecting plate 122 is located on the side of the carrying plate 121 facing away from the casing 11, and the connecting plate 122 is a part of the carrying component 12 adapted to achieve connection and fixing of the carrying component 12 with the chassis of the vehicle 1000. The connecting plate 122 is formed as an annular structure and encloses and forms the second accommodating chamber 123, and the second accommodating chamber 123 is adapted for disposing electronic devices such as high-voltage boxes that need to be electrically connected to the battery 100. Meanwhile, an end of the second accommodating chamber 123 facing away from the carrying plate 121 is formed with the second opening, and the presence of the second opening 124 is adapted to transfer the electronic devices from the outside to the second accommodating chamber 123.

Further, there are no limitations on the size of the connecting plate 122 relative to the carrying plate 121 in the embodiments of the present application. Exemplarily, an orthographic projection of the connecting plate 122 is located within the outer contour of the carrying plate 121. The presence of the connecting plate 122 can space the carrying plate 121 apart from the chassis of the vehicle 1000, that is, can achieve a separation between the casing 11 and the chassis of the vehicle 1000. Such design can reduce the risk of residual liquids on the chassis of the vehicle 1000 seeping into the interior of the casing 11, thereby further improving the safety of the battery 100.

By providing the connecting plate 112, the embodiments of the present application can provide additional space for disposing the electronic devices within the battery 100, thereby further improving the utility rate of space within the battery 100 and ensuring an overall compact structure of the battery 100.

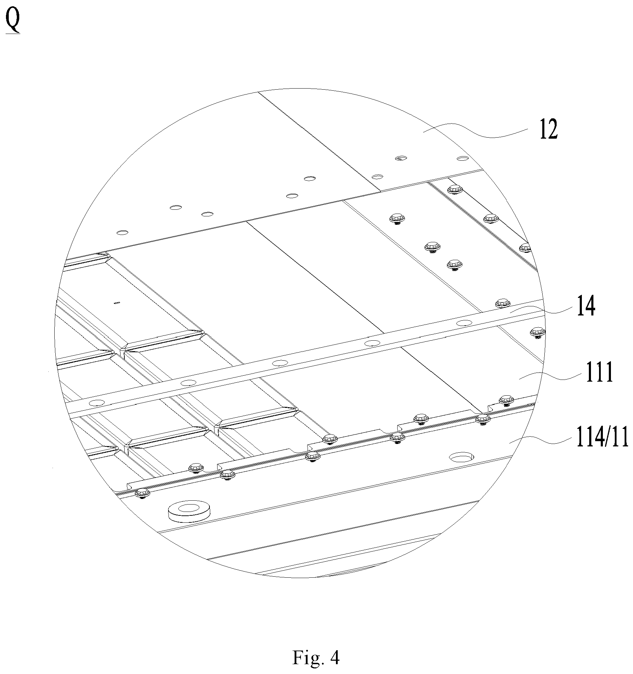

In some embodiments, as shown in Fig. 4, the first sealing member 14 is fixedly connected to the carrying plate 121. The first sealing member 14 can be fixed on the carrying plate 121 by bonding or other manners. By fixing the first sealing member 14 on the carrying plate 121, the embodiments of the present application reduce the risk of misalignment of the first sealing member 14 caused by shaking and other factors during the operation of the vehicle 1000, thereby ensuring that the first sealing member 14 can continuously maintain a good sealing effect during the operation of the vehicle 1000, further reducing the risk of water vapor or dust in the environment entering the interior of the casing 11, and improving the safety of the battery 100.

As shown in Figs. 2 and 6, the battery 100 further includes a cover plate 15 and a second sealing member 16, the cover plate 15 is adapted to cover and close the second opening 124, and at least a portion of the second sealing member 16 is disposed between the cover plate 15 and the connecting plate 122 to seal the second opening 124.

The cover plate 15 is adapted to cover and close the second opening 124, and the cover plate 15 and the connecting plate 122 can be fixed by welding, bonding, bolted connection or the like. The second sealing member 16 is at least partially disposed between the connecting plate 122 and the cover plate 15 to seal the second opening 124, and the second sealing member 16 can be fixedly connected to at least one of the cover plate 15 and the connecting plate 122 through bonding, bolted connection or the like. Similarly to the first sealing member 14, the second sealing member 16 also includes but is not limited to the lip type sealing member and the compressing type sealing member.

The embodiments of the present application do not limit the size and shape of the second sealing member 16, and optionally, an outer contour of an orthographic projection of the second sealing member 16 on the cover plate 15 covers an orthographic projection of the second opening 124 on the cover plate 15, and meanwhile coincides with an outer contour of the cover plate 15. This can avoid space and material waste caused by protrusion of the second sealing member 16 while ensuring that the second sealing member 16 can seal the second opening 124.

The embodiments of the present application add the second sealing member 16 on the basis of the first sealing member 14, and the second sealing member 16 is located between the cover plate 15 and the connecting plate 122, that is, located near the connecting portion between the chassis of the vehicle 1000 and the battery 100. By providing the second sealing member 16, firstly, the risk of water vapor or dust entering the second accommodating chamber 123 is reduced and the reliability in use of the electronic devices inside the second accommodating chamber 123 is improved, and secondly, the risk of water vapor or dust entering the interior of the vehicle 1000 from a vicinity of the connecting portion between the chassis of the vehicle 1000 is reduced, and the safety of the vehicle 1000 in use is improved.

In some embodiments, the battery 100 further includes a control box 17, which is accommodated in the second accommodating chamber 123 and electrically connected to the battery cell 13.

The control box 17 is an electronic device disposed in the second accommodating chamber 123, and includes but is not limited to relays, other voltage controllers, and current controllers. The control box 17 is electrically connected to the battery cell 13 and is adapted to control the operation of the vehicle 1000, and optionally, the control box 17 is further electrically connected to the controller of the vehicle 1000, the battery 100 is adapted to provide energy for the operation of the vehicle 1000, and the controller cooperates with the control box to transmit electrical energy to different devices of the vehicle 1000 so as to achieve different functions.

In the embodiments of the present application, the control box 17 is disposed in the second accommodating chamber 123 inside the battery 100, so that a distance between the control box and the battery unit 13 is relatively short, which is conducive to achieving electrical connection between the battery cell 13 and the control box 17.

As shown in Fig. 6, the connecting plate 122 includes a side wall 1222 and a top wall 1221, the top wall 1221 is disposed opposite the carrying plate 121 and encloses and forms the second opening 124, and the side wall 1222 is disposed around the top wall 1221 and connected to the carrying plate 121.

The side wall 1222 is formed as a closed annular structure which is disposed around the second accommodating chamber 123 on an outer peripheral side thereof, and meanwhile, is further fixedly connected with the carrying plate 121. The connection manner between the side wall 1222 and the carrying plate 121 includes but is not limited to welding, bonding, bolted connection, and the like.

The top wall 1221 is located on a side of the side wall 1222 facing away from the carrying plate 121, the top wall 1221 is formed as an annular structure, and the opening formed by the top wall 1221 is the second opening 124. Meanwhile, there is a certain angle between the top wall 1221 and the side wall 1222, the presence of the top wall 1221 provides installation space for the cover plate 15, so that the cover plate 15 can be fixedly connected to the top wall 1221, and the connection manner includes but is not limited to welding, bonding, bolted connection or the like.

It should be noted that in the embodiments of the present application, the thickness H of the carrying component 12 has a various situations. Specifically, the carrying component 12 includes the carrying plate 121 and the connecting plate 122, and at the position of the carrying plate 121, the thickness H of the carrying component 121 refers to the thickness dimension of the carrying plate 121 in the thickness direction X. At the position of the connecting plate 122, the connecting plate 122 includes the side wall 1222 and the top wall 1221 while the thickness direction of the side wall 1222 is not parallel to the thickness direction of the top wall 1221, and thus the thickness H of the carrying component 121 at the connecting plate 122 should be understood as the wall thickness at the position corresponding to the connecting plate 122. In Fig. 5, only the thickness H of the carrying component 12 at the carrying plate 121 is shown.

In some optional embodiments, the top wall 1221 is parallel to the carrying plate 121 and an angle of 90° is formed between the top wall 1222 and the side wall 1222. In this way, the cover plate 15 can be installed parallel to the carrying plate 121, and further, after the battery 100 is installed on the vehicle 1000, the battery 100 is made to be parallel to the chassis of the vehicle 1000 as much as possible, thereby improving installation reliability.

In some embodiments, the second sealing member 16 is fixedly connected to the top wall 1221, and the second sealing member 16 can be fixed to the top wall 1221 by bonding or other manners. By fixing the second sealing member 16 on the top wall 1221, the embodiments of the present application reduce the risk of misalignment of the second sealing member 16 caused by shaking and other factors during the operation of the vehicle 1000, ensure that the second sealing member 16 can continuously maintain a good sealing effect during the operation of the vehicle 1000, further reduce the risk of water vapor or dust in the environment entering the second accommodating chamber 123 and the interior of the vehicle 1000, and improve safety in use.

As shown in Fig. 6, a surface of the side wall 1222 facing away from the second accommodating member 123 is recessed towards a direction close to the second accommodating chamber 123 to form a guiding groove 1223, and the guiding groove 1223 extends in the thickness direction X of the carrying plate 121.

The surface of the side wall 1222 facing away from the second accommodating chamber 123 is an outer surface of the side wall 1222, and thus the outer surface of the side wall 1222 includes the guiding groove 1223 extending in the thickness direction X of the carrying plate 121. When the vehicle 1000 is in the adverse conditions such as wading through water, some of the liquids may splash onto the chassis of the vehicle 1000 or the side wall 1222. In this case, the guiding groove 1223 can guide the flow of liquids, and under the action of gravity, the liquids will flow downwards along the guiding groove 1223 and flow to the carrying plate 121. Due to the presence of the first sealing member 14, the liquids will not enter the casing 11 and will eventually leave the carrying plate 121 along with the shaking of the vehicle 1000 and inertia effect thereof.

In some embodiments, there may be multiple guiding grooves 1223, and the multiple guiding grooves 1223 are spaced apart from each other around the second accommodating chamber 123.

Multiple guiding grooves 1223 are provided on the side wall 1222, and all the multiple guiding grooves 1223 can guide the flow of liquids and thus help the liquids leave the chassis of the vehicle 1000 and the side wall 1222 as soon as possible. In some embodiments, the multiple guiding grooves 1223 are uniformly distributed on the side wall 1222 at equal intervals, thereby improving the guiding effect on the liquids.

In some embodiments, at least one of the first sealing member 14 and the second sealing member 16 is formed as an annular structure.

Both the first sealing member 14 and the second sealing member 16 are adapted to improve the sealing effect, and by forming at least one of the first sealing member 14 and the second sealing member 16 as the annular structure, the size of the first sealing member 14 or the second sealing member 16 can be reduced while ensuring the sealing effect, thereby reducing material waste. Further, both the first sealing member 14 and the second sealing member 16 are formed as annular sealing ring structures.

In a second aspect, the embodiments of the present application provide an electric-powered device, including the battery 100 in any of the above embodiments, which is adapted to provide electrical energy.

It should be noted that the electric-powered device provided in the embodiments of the present application has the beneficial effects the same as the battery 100 in any of the above embodiments, and the specific beneficial effects please refer to the above description of the battery 100 in detail, and will not be repeated in the present embodiments of the application.

According to some embodiments of the present application, please refer to Figs. 2 to 6, the battery 100 includes the casing 11, the carrying component 12, the battery cell 13, the first sealing member 14, and the second sealing member 16, the casing 11 includes the first opening 111, the carrying component 12 is adapted to cover and close the first opening 111 to enclose and form the first accommodating chamber 112 with the casing 11, and the battery cell 13 is accommodated in the first accommodating chamber 112 and connected to the carrying component 12.

The carrying component 12 includes the carrying plate 121 and the connecting plate 122 disposed on the side of the carrying plate 121 facing away from the casing 11, the first sealing member 14 is disposed between the carrying plate 121 and the casing 11 and is fixedly connected to the carrying plate 121 so as to seal the first opening 111. The connecting plate 122 is formed as an annular structure and includes a side wall 1222 and a top wall 1221, the top wall 1221 is located on the side of the side wall 1222 facing away from the carrying plate 121 and encloses and forms the second opening 124, and the second sealing member 16 is fixedly connected to the top wall 1221 to seal the second opening 124.

It should be noted that in the absence of conflicts, the embodiments and the features in the embodiments in the present application can be combined with each other.

## Claims

1. A battery (100), comprising:
a casing (11), comprising a first opening (111);
a carrying component (12), adapted for covering and closing the first opening (111) to form a first accommodating chamber (112) with the casing (11);
a battery cell (13), accommodated in the first accommodating chamber (112) and connected to the carrying component (12);
a first sealing member (14), at least partially disposed between the casing (11) and the carrying component (12) to seal the first opening (111);
**characterised in that**
the carrying component (12) comprises a carrying plate (121) and a connecting plate (122) disposed on a side of the carrying plate (121) facing away from the casing (11), and the first sealing member (14) is disposed between the carrying plate (121) and the casing (11);
the connecting plate (122) is formed as an annular structure, the connecting plate (122) encloses and forms a second accommodating chamber (123) with the carrying plate (121), and an end of the second accommodating chamber (123) facing away from the carrying plate (121) is formed with a second opening (124);
further comprising a cover plate (15) and a second sealing member (16), wherein the cover plate (15) is adapted to cover and close the second opening (124), and at least a portion of the second sealing member (16) is disposed between the cover plate (15) and the connecting plate (122) to seal the second opening (124);
wherein the connecting plate (122) comprises a side wall (1222) and a top wall (1221), the top wall (1221) is disposed opposite the carrying plate (121) and encloses and forms the second opening (124), and the side wall (1222) is disposed around the top wall (1221) and connected to the carrying plate (121); and
wherein a surface of the side wall (1222) facing away from the second accommodating chamber (123) is recessed towards a direction close to the second accommodating chamber (123) to form a guiding groove (1223), and the guiding groove (1223) extends in a thickness direction of the carrying plate (121).

2. The battery (100) according to claim 1, wherein a thickness of the carrying component (12) is H, and 0.4 mm < H ≤ 30 mm.

3. The battery (100) according to claim 2, wherein 0.5 mm ≤ H ≤ 10 mm.

4. The battery (100) according to any of claims 1-3, wherein a thickness of the carrying component (12) is H, a weight of the battery (100) is M, and H and M meet the requirements of 0.0004 mm/kg < H/M ≤ 3 mm/kg.

5. The battery (100) according to claim 4, wherein H and M meet the requirements of 0.006 mm/kg < H/M ≤ 1 mm/kg.

6. The battery (100) according to any preceding claim, wherein the first sealing member (14) is fixedly connected to the carrying plate (121).

7. The battery (100) according to any preceding claim, further comprising a control box (17), accommodated in the second accommodating chamber (123) and electrically connected to the battery cell (13).

8. The battery (100) according to any preceding claim, wherein the second sealing member (16) is fixedly connected to the top wall (1221).

9. The battery (100) according to any preceding claim, wherein multiple guiding grooves (1223) are provided, and the multiple guiding grooves (1223) are spaced apart from each other around the second accommodating chamber (123) on an outer side thereof.

10. The battery (100) according to any preceding claim, wherein at least one of the first sealing member (14) and the second sealing member (16) is formed as an annular structure.

11. An electric-powered device, including a battery (100) according to any of claims 1 to 10, wherein the battery (100) is adapted for providing electrical energy.

## Patentansprüche

1. Batterie (100), umfassend:
ein Gehäuse (11), umfassend eine erste Öffnung (111);
eine Trägerkomponente (12), die angepasst ist zum Abdecken und Verschließen der ersten Öffnung (111), um mit dem Gehäuse (11) eine erste Aufnahmekammer (112) auszubilden;
eine Batteriezelle (13), die in der ersten Aufnahmekammer (112) aufgenommen und mit der Trägerkomponente (12) verbunden ist;
ein erstes Dichtungselement (14), das mindestens teilweise zwischen dem Gehäuse (11) und der Trägerkomponente (12) angeordnet ist, um die erste Öffnung (111) abzudichten;
**dadurch gekennzeichnet, dass** die Trägerkomponente (12) eine Trägerplatte (121) und eine Verbindungsplatte (122) umfasst, die auf einer Seite der Trägerplatte (121), die dem Gehäuse (11) abgewandt ist, angeordnet ist, und das erste Dichtungselement (14) zwischen der Trägerplatte (121) und dem Gehäuse (11) angeordnet ist;
die Verbindungsplatte (122) als eine ringförmige Struktur ausgebildet ist, die Verbindungsplatte (122) eine zweite Aufnahmekammer (123) mit der Trägerplatte (121) umschließt und ausbildet, und ein Ende der zweiten Aufnahmekammer (123), das von der Trägerplatte (121) abgewandt ist, mit einer zweiten Öffnung (124) ausgebildet ist;
ferner umfassend eine Abdeckplatte (15) und ein zweites Dichtungselement (16), wobei die Abdeckplatte (15) dazu angepasst ist, die zweite Öffnung (124) abzudecken und zu verschließen, und mindestens ein Abschnitt des zweiten Dichtungselements (16) zwischen der Abdeckplatte (15) und der Verbindungsplatte (122) angeordnet ist, um die zweite Öffnung (124) abzudichten;
wobei die Verbindungsplatte (122) eine Seitenwand (1222) und eine obere Wand (1221) umfasst, wobei die obere Wand (1221) der Trägerplatte (121) gegenüberliegend angeordnet ist und die zweite Öffnung (124) umschließt und ausbildet, und die Seitenwand (1222) um die obere Wand (1221) herum angeordnet und mit der Trägerplatte (121) verbunden ist; und
wobei eine Oberfläche der Seitenwand (1222), die von der zweiten Aufnahmekammer (123) abgewandt ist, in einer Richtung nahe der zweiten Aufnahmekammer (123) vertieft ist, um eine Führungsnut (1223) auszubilden, und sich die Führungsnut (1223) in einer Dickenrichtung der Trägerplatte (121) erstreckt.

2. Batterie (100) nach Anspruch 1, wobei eine Dicke der Trägerkomponente (12) H ist und 0,4 mm ≤ H ≤ 30 mm.

3. Batterie (100) nach Anspruch 2, wobei 0,5 mm ≤ H ≤ 10 mm.

4. Batterie (100) nach einem der Ansprüche 1 bis 3, wobei eine Dicke der Trägerkomponente (12) H ist, ein Gewicht der Batterie (100) M ist und H und M die Anforderungen 0,0004 mm/kg < H/M ≤ 3 mm/kg erfüllen.

5. Batterie (100) nach Anspruch 4, wobei H und M die Anforderungen von 0,006 mm/kg < H/M ≤ 1 mm/kg erfüllen.

6. Batterie (100) nach einem der vorstehenden Ansprüche, wobei das erste Dichtungselement (14) fest mit der Trägerplatte (121) verbunden ist.

7. Batterie (100) nach einem der vorstehenden Ansprüche, ferner umfassend einen Steuerungskasten (17), der in der zweiten Aufnahmekammer (123) aufgenommen und elektrisch mit der Batteriezelle (13) verbunden ist.

8. Batterie (100) nach einem der vorstehenden Ansprüche, wobei das zweite Dichtungselement (16) fest mit der oberen Wand (1221) verbunden ist.

9. Batterie (100) nach einem der vorstehenden Ansprüche, wobei mehrere Führungsnuten (1223) bereitgestellt sind und die mehreren Führungsnuten (1223) um die zweite Aufnahmekammer (123) herum auf einer Außenseite davon voneinander beabstandet sind.

10. Batterie (100) nach einem der vorstehenden Ansprüche, wobei mindestens eines des ersten Dichtungselements (14) und des zweiten Dichtungselements (16) als eine ringförmige Struktur ausgebildet ist.

11. Elektrisch betriebene Vorrichtung, einschließlich einer Batterie (100) nach einem der Ansprüche 1 bis 10, wobei die Batterie (100) angepasst ist zum Bereitstellen elektrischer Energie.

## Revendications

1. Batterie (100), comprenant :
un boîtier (11), comprenant une première ouverture (111) ;
un composant de support (12), conçu pour couvrir et fermer la première ouverture (111) afin de former une première chambre de réception (112) avec le boîtier (11) ;
une cellule de batterie (13), reçue dans la première chambre de réception (112) et raccordée au composant de support (12) ;
un premier élément d'étanchéité (14), au moins en partie disposé entre le boîtier (11) et le composant de support (12) pour assurer l'étanchéité de la première ouverture (111) ;
**caractérisée en ce que** le composant de support (12) comprend une plaque de support (121) et une plaque de raccordement (122) disposée sur un côté de la plaque de support (121) qui est orienté à l'opposé du boîtier (11), et le premier élément d'étanchéité (14) est disposé entre la plaque de support (121) et le boîtier (11) ;
la plaque de raccordement (122) prend la forme d'une structure annulaire, la plaque de raccordement (122) ferme et forme une deuxième chambre de réception (123) avec la plaque de support (121), et une extrémité de la deuxième chambre de réception (123) orientée à l'opposé de la plaque de support (121) est formée avec une deuxième ouverture (124) ;
comprenant en outre une plaque de couvercle (15) et un deuxième élément d'étanchéité (16), la plaque de couvercle (15) étant conçue pour couvrir et fermer la deuxième ouverture (124), et au moins une partie du deuxième élément d'étanchéité (16) étant disposée entre la plaque de couvercle (15) et la plaque de raccordement (122) pour assurer l'étanchéité de la deuxième ouverture (124) ;
la plaque de raccordement (122) comprenant une paroi latérale (1222) et une paroi supérieure (1221), la paroi supérieure (1221) étant disposée à l'opposé de la plaque de support (121) et ferme et forme la deuxième ouverture (124), et la paroi latérale (1222) étant disposée autour de la paroi supérieure (1221) et raccordée à la plaque de support (121) ; et
une surface de la paroi latérale (1222) orientée à l'opposé de la deuxième chambre de réception (123) étant en creux vers une direction proche de la deuxième chambre de réception (123) pour former une rainure de guidage (1223), et la rainure de guidage (1223) s'étendant dans une direction d'épaisseur de la plaque de support (121).

2. Batterie (100) selon la revendication 1, dans laquelle une épaisseur du composant de support (12) est H, et 0,4 mm ≤ H ≤ 30 mm.

3. Batterie (100) selon la revendication 2, dans laquelle 0,5 mm ≤ H ≤ 10 mm.

4. Batterie (100) selon l'une quelconque des revendications 1 à 3, dans laquelle une épaisseur du composant de support (12) est H, un poids de la batterie (100) est M, et H et M respectent les exigences de 0,0004 mm/kg < H/M ≤ 3 mm/kg.

5. Batterie (100) selon la revendication 4, dans laquelle H et M respectent les exigences de 0,006 mm < H/M ≤ 1 mm/kg.

6. Batterie (100) selon l'une quelconque des revendications précédentes, dans laquelle le premier élément d'étanchéité (14) est raccordé de manière fixe à la plaque de support (121).

7. Batterie (100) selon l'une quelconque des revendications précédentes, comprenant en outre un boîtier de commande (17), reçu dans la deuxième chambre de réception (123) et électriquement raccordé à la cellule de batterie (13).

8. Batterie (100) selon l'une quelconque des revendications précédentes, dans laquelle le deuxième élément d'étanchéité (16) est raccordé de manière fixe à la paroi supérieure (1221).

9. Batterie (100) selon l'une quelconque des revendications précédentes, dans laquelle plusieurs rainures de guidage (1223) sont fournies, et les plusieurs rainures de guidage (1223) sont espacées les unes des autres autour de la deuxième chambre de réception (123) sur un côté externe de celle-ci.

10. Batterie (100) selon l'une quelconque des revendications précédentes, dans laquelle au moins l'un du premier élément d'étanchéité (14) et du deuxième élément d'étanchéité (16) prend la forme d'une structure annulaire.

11. Dispositif à alimentation électrique, comprenant une batterie (100) selon l'une quelconque des revendications 1 à 10, la batterie (100) étant conçue pour fournir de l'énergie électrique.
